# FASCICULE DE BREVET EUROPEEN

(11) **EP 2 103 918 B1**
(45) Date de publication et mention de la délivrance du brevet: **20.03.2013**
(21) Numéro de dépôt: 09154505.3
(22) Date de dépôt: 06.03.2009
(51) Int. Cl.: B29K 77/00, B29K 101/12, G01L 3/10, G01L 5/22

(54) **Dispositif de détection de couple pour système de direction de véhicule automobile**
Vorrichtung zur Erkennung des Drehmoments für ein Lenksystem eines Kraftfahrzeugs
Torque detection device for automobile steering system

(30) Priorité: 18.03.2008 FR 0801475
(43) Date de publication de la demande: 23.09.2009
(73) Titulaire: Jtekt Europe, 69540 Irigny (FR)
(72) Inventeur: Plataret, Nicolas, 69008, LYON (FR); Rey, Laurent, 69100, VILLEURBANNE (FR)
(74) Mandataire: Maureau, Philippe

(56) Documents cités:
- JP-A- 2005 156 468
- US-A1- 2003 167 857
- US-A1- 2006 201 270
- WATSON M N: "WELDING PLASTICS FOR THE AUTOMOTIVE INDUSTRY" SAE TRANSACTIONS, SOCIETY OF AUTOMOTIVE ENGINEERS, INC., WARRENDALE, PA, US, 1 janvier 1987 (1987-01-01), pages 3659-3667, XP000775946 ISSN: 0096-736X
- RENNERT ET AL: "Laser-adapted construction for plastic welding" INTERNET CITATION, [Online] XP007901553 Extrait de l'Internet: URL:http://www.rofin.com/deutsch/anwendung en/laser-mikro-micro/data/E_PlastEurope02- 04_Laser_adapted_Construction.pdf> [extrait le 2007-01-15]

## Description

La présente invention concerne, de façon générale, les systèmes de direction des véhicules automobiles. Elle se rapporte, plus particulièrement, à un dispositif de détection de couple pour un système de direction de véhicule automobile, ce dispositif étant destiné à mesurer le couple exercé par le conducteur du véhicule sur le volant de conduite, en vue de l'assistance électrique ou hydraulique de la direction.

Dans les systèmes de direction assistée, le couple ou l'effort d'assistance fourni pour soulager le conducteur du véhicule est asservi au couple exercé par le conducteur sur le volant de conduite, ce qui rend nécessaire la présence d'un capteur de couple au volant, à partir duquel est commandée l'intensité de l'action d'assistance. Parmi les capteurs de couple utilisables, les capteurs les plus habituels utilisent la variation d'angle d'une barre de torsion. Une catégorie plus particulière de dispositifs de détection de couple, utilisés notamment dans les systèmes de direction, comprend des capteurs fonctionnant sur un principe magnétique, tels que les capteurs décrits dans les documents de brevets FR 2 837 282 A1 (ou son équivalent US 2003/167857 A1), FR 2 872 902 A1, US 2005/0126309 A1 et US 6 988 422 B2.

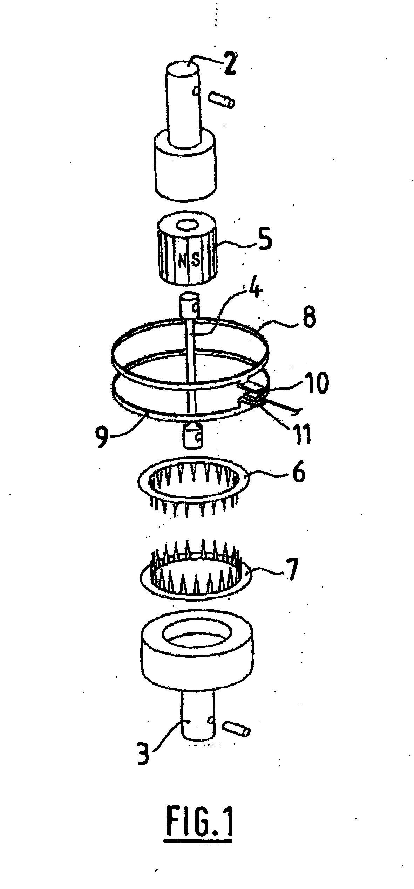

En se référant à la figure 1 du dessin schématique annexé, ce genre de capteur de couple est intercalé entre un arbre rotatif d'entrée 2 et un arbre rotatif de sortie 3, et il comprend cinq éléments principaux, qui sont :
- une barre de torsion 4 reliant mécaniquement les extrémités coaxiales de l'arbre d'entrée 2 et de l'arbre de sortie 3 ;
- un ensemble d'aimants permanents 5 solidaire de l'extrémité de l'arbre d'entrée 2 ;
- une paire de culasses magnétiques 6 et 7 solidaire de l'extrémité de l'arbre de sortie 3 ;
- un support collecteur de flux magnétique, composé de deux bagues collectrices 8 et 9, surmoulées par un matériau plastique, de sorte que ces bagues collectrices 8, 9 sont présentes sur la face intérieure de la masse surmoulée, et d'un bouclier électromagnétique (ici non représenté) ;
- un capteur de flux magnétique, composé de deux capteurs à effet Hall 10 et 11 surmoulés par une matière thermoplastique et comprenant un bouclier électromagnétique (ici non représenté).

Le support collecteur de flux, et le capteur de flux, sont des éléments fixes à monter dans le système de direction. Plus particulièrement, dans des systèmes de direction connus, le support collecteur de flux est placé directement dans l'un des carters en aluminium du système de direction. Le capteur de flux vient ensuite s'intégrer dans le support collecteur de flux, au moyen de formes complémentaires appropriées. Ces éléments sont ensuite rendus solidaires entre eux et avec le carter en aluminium au moyen d'une ou de plusieurs vis d'assemblage, et grâce à un ou des trous filetés réalisés préalablement ou non dans le carter, des joints assurant l'étanchéité de l'assemblage.

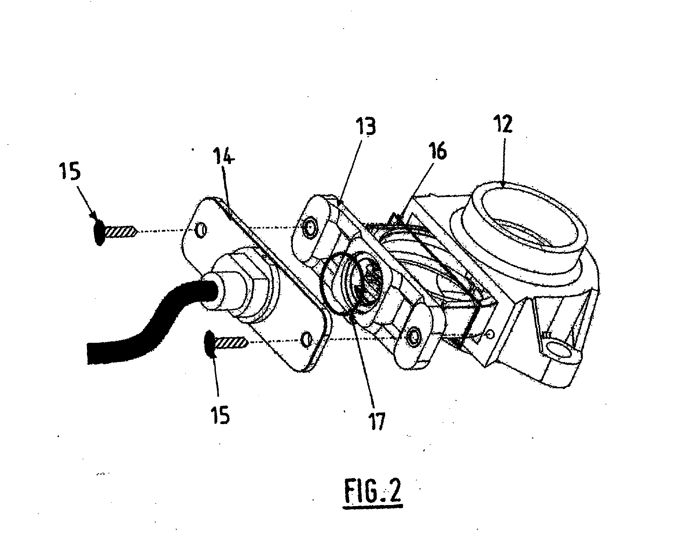

Un exemple d'un tel mode connu d'assemblage est illustré par la figure 2, sur laquelle :
- la référence 12 désigne le carter en aluminium ;
- la référence 13 désigne le support collecteur de flux ;
- la référence 14 désigne le support du capteur de flux ;
- les vis d'assemblage sont indiquées en 15 ; et
- les joints d'étanchéité intercalés sont respectivement désignés 16 et 17.

Les dispositifs existants de ce genre présentent l'inconvénient d'être délicats et longs à assembler, ce qui affecte la précision de l'assemblage et rend aussi la fonction « capteur de couple » coûteuse. En outre, l'efficacité des joints d'étanchéité n'étant pas parfaite, des infiltrations sont fréquemment constatées, entraînant elles-mêmes de coûteuses reprises.

La présente invention vise à remédier à ces inconvénients, et elle donc pour but de fournir un dispositif de détection de couple, du genre ici concerné, dont l'assemblage est simplifié donc rendu plus économique, tout en améliorant la précision de montage ainsi que l'étanchéité.

Ce problème est résolu, dans un dispositif de détection de couple pour un système de direction de véhicule automobile, le dispositif comprenant une barre de torsion reliant un arbre d'entrée à un arbre de sortie, un ensemble d'aimants permanents solidaire de l'arbre d'entrée, une paire de culasses magnétiques solidaire de l'arbre de sortie, un support collecteur de flux avec intérieurement deux bagues collectrices qui est monté dans un carter du système de direction, et un capteur de flux magnétique monté sur le support collecteur, par le fait que le support collecteur de flux et le carter sont réalisés majoritairement dans des matières plastiques identiques ou compatibles, et que le support collecteur de flux est soudé sur le carter de manière à former avec ce carter une structure monobloc.

Le carter en matière plastique et le support collecteur de flux peuvent être assemblés par une soudure par ultrasons, ou par une soudure par vibrations, ou encore par une soudure au laser.

Le carter en matière plastique et le support collecteur de flux sont avantageusement mis en contact et assemblés par soudure dans une zone d'assemblage située à leur périphérie. La zone de soudure, s'étendant ainsi sur toute la périphérie du carter et du support collecteur de flux, réalise une liaison étanche de ces éléments.

Ainsi, l'idée à la base de la présente invention consiste à réaliser l'un des carters du système de direction en une matière plastique appropriée, ce qui permet de constituer une structure monobloc en matière plastique comprenant le carter et le support collecteur de flux. Ce dernier, réalisé en matière plastique, surmoule de façon connue en soi les deux bagues collectrices du dispositif, et est assemblé par soudure au carter réalisé dans une matière identique ou compatible. La forme donnée à la zone de soudure, en particulier configurée en cordon continu de soudure, assure la solidité de l'assemblage et l'étanchéité de celui-ci.

On entend ici, par « matière plastique appropriée », un matériau synthétique ou composite mécaniquement robuste, stable dimensionnellement dans une plage de températures allant typiquement de -40°C à + 120°C, et résistant à l'environnement chimique d'un système de direction (huile, graisse, eau, salissures, brouillard salin, ...). Ces matières sont soit thermoplastiques, soit thermo-durcissables. Elles sont communément renforcées par des fibres de verre pour augmenter leur rigidité (module d'Young) et leur ténacité (résistance au choc Charpy). Il s'agit pour la plupart de thermoplastiques « hautes performances » présentant une bonne résistance mécanique à des températures élevées (température de déflexion sous charge).

Des exemples de matières thermoplastiques convenant à ce type d'application sont donnés dans le tableau ci-dessous.

| Matière | Module d'Young (GPa) mesuré à 20°C IS0 527-1 | Température de fléchissement sous charge (1,8 MPa) ISO 75-1 / -2 | Résistance au choc Charpy (kJ/m²) (+23°C) ISO 179 /leU |
|---|---|---|---|
| PA66 GF 50 Polyamide «66» renforcé par 30% de fibre de verre | 17 | 250 | 95 |
| PA 46 GF 50 Polyamide «46» renforcé par 30% de fibre de verre | 17 | 295 | 100 |
| PA 6T/66 GF 50 Polyamide semi-aromatique renforcé par 50% de fibre de verre | 17 | 285 | 85 |
| PA66/6T GF 45 Polyphthalamide renforcé par 45% de fibre de verre | 17 | 287 | 93 |
| PPS GF 40 Poly phenylène sulphone renforcé par 40% de fibre de verre | 14 | 260 | 48 |

Par « matières plastiques identiques ou compatibles », on entend que les deux matières à souder doivent être chimiquement compatibles. Il peut s'agir aussi de deux matières dont la base thermoplastique est identique, leurs formulations ne variant que sur des adjuvants (colorants, renforts, ...). Il peut s'agir aussi de matières dont la base thermoplastique est compatible ; on connaît par exemple la compatibilité entre le polycarbonate et le poly methyl methacrylate.

L'invention sera mieux comprise, et d'autres caractéristiques seront mises en évidence, à l'aide de la description qui suit, en référence au dessin schématique annexé représentant, à titre d'exemple, une forme d'exécution de ce dispositif de détection de couple pour système de direction de véhicule automobile.
Figure 1 (déjà mentionnée) est une vue en perspective éclatée d'un dispositif détecteur de couple existant ;
Figure 2 (déjà mentionnée) est une vue en perspective éclatée illustrant le mode d'assemblage actuel d'un tel dispositif détecteur de couple ;
Figure 3 est une vue en coupe d'un dispositif détecteur de couple selon la présente invention, montrant plus particulièrement la structure monobloc constituée du carter et du support collecteur de flux :
Figures 4 et 5 sont des vues partielles du dispositif de la figure 3, dans la zone d'assemblage du support collecteur de flux et du carter, respectivement avant et après soudure.

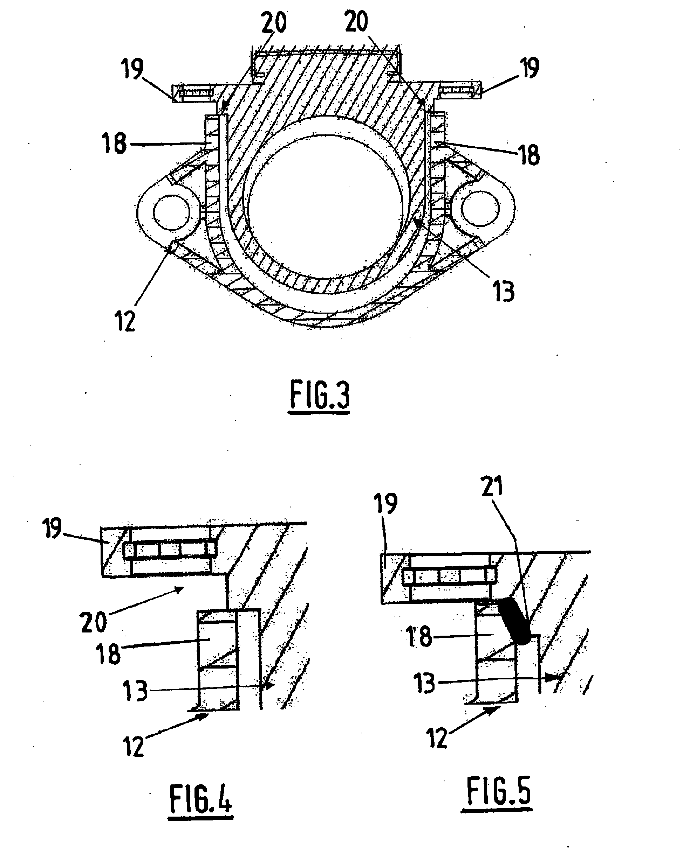

En se référant aux figures 3 à 5, on considère plus particulièrement, pour un dispositif de détection de couple du genre précédemment défini, le carter 12 du système de direction et le support collecteur de flux 13 qui prend place partiellement dans ce carter 12.

Le carter 12, qui présente dans la partie concernée une section en forme générale de «U» avec deux branches 18 parallèles, est réalisé en matière plastique.

Le support collecteur de flux 13 est réalisé dans une matière plastique identique à celle du carter 12, ou du moins une matière plastique compatible avec celle du carter 12. Ce support collecteur de flux 13 possède une partie périphérique 19 prévue pour être assemblée à la périphérie du carter 12, les figures 4 et 5 représentant à échelle agrandie la zone d'assemblage 20.

Lors de l'opération de soudure, dans la zone d'assemblage 20, des parties complémentaires du carter 12 et du support collecteur de flux 13 sont mises en contact (voir figure 4), puis sont sollicitées de manière appropriée de sorte que la température des deux parties augmente localement jusqu'à la fusion de la matière plastique. Une interpénétration de ces deux parties se produit alors, formant un cordon de soudure 21, qui conduit à la solidarisation des deux parties une fois l'assemblage refroidi (voir figure 5). Le carter 12 et le support collecteur de flux 13 forment ainsi, finalement, une structure monobloc non démontable, rigide et étanche.

Par « sollicitées de manière appropriée » on englobe ici différentes techniques utilisables pour solliciter les deux pièces à assembler, en vue d'élever localement la température. On connaît ainsi les sollicitations mécaniques dans la soudure par vibrations ou par ultrasons associées à une pression importante sur le cordon à souder. On connaît également des sollicitations thermiques indirectes par rayonnement laser ou infrarouge ou par mise en contact direct du cordon avec un élément chauffant. Dans tous les cas, il s'agit d'obtenir une interpénétration des chaînes polymères, qui conduit à la soudure de deux pièces, à savoir le carter 12 d'une part et le support collecteur de flux 13 d'autre part.

La forme des deux parties mises en contact dans la zone d'assemblage 20, ces parties appartenant respectivement au carter 12 et au support collecteur de flux 13, doit permettre une concentration de la sollicitation dans une zone particulière, bien localisée.

Le carter 12 et le support collecteur de flux 13 sont réalisés avantageusement en une matière thermoplastique « haute température », choisie préférentiellement parmi le polysulfure de phénylène (PPS), le polyphtalamide (PPA) et le polyamide (PA).

L'on ne s'éloignerait pas du cadre de l'invention, telle que définie dans les revendications annexées :
- en réalisant le carter et le support collecteur de flux en d'autres matières plastiques, du moment que celles-ci soient identiques ou compatibles, et appropriées pour l'utilisation concernée ;
- en modifiant les formes du carter et du support collecteur de flux, du moment que les parties situées dans la zone d'assemblage soient convenablement conformées ;
- en modifiant la structure ou même la conception des éléments du dispositif non concernés directement par l'invention, par exemple la barre de torsion, laquelle peut être remplacée par tout équivalent, tel qu'une pièce en matériau souple déformable élastiquement dans le sens cironférentiel, et reliant l'arbre d'entrée à l'arbre de sortie :
   - en utilisant toute procédé ou technologie de soudure pour l'assemblage du carter et du support collecteur de flux ;
   - en destinant un tel dispositif de détection de couple à une direction assistée pouvant être de tout type, en particulier hydraulique ou électrique.

## Revendications

1. Dispositif de détection de couple pour un système de direction de véhicule automobile, le dispositif comprenant une barre de torsion (4) ou équivalent reliant un arbre d'entrée (2) à un arbre de sortie (3), un ensemble d'aimants permanents (5) solidaire de l'arbre d'entrée (2), une paire de culasses magnétiques (6 ,7) solidaire de l'arbre de sortie (3), un support collecteur de flux (13) avec intérieurement deux bagues collectrices (8, 9) qui est monté dans un carter (12) du système de direction, et un capteur de flux magnétique (10,11) monté sur le support collecteur (13), **caractérisé en ce que** le support collecteur de flux (13) et le carter (12) sont réalisés majoritairement dans des matières plastiques identiques ou compatibles, et **en ce que** le support collecteur de flux (13) et le carter (12) sont assemblés par sondage de manière à former une structure monobloc.

2. Dispositif de détection de couple selon la revendication 1, **caractérisé en ce que** le carter (12) en matière plastique et le support collecteur de flux (13) sont assemblés par une soudure par ultrasons.

3. Dispositif de détection de couple selon la revendication 1, **caractérisé en ce que** le carter (12) en matière plastique et le support collecteur de flux (13) sont assemblés par une soudure par vibrations.

4. Dispositif de détection de couple selon la revendication 1, **caractérisé en ce que** le carter (12) en matière plastique et le support collecteur de flux (13) sont assemblés par une soudure au laser.

5. Dispositif de détection de couple selon l'une des revendications 1 à 4, **caractérisé en ce que** le carter (12) en matière plastique et le support collecteur de flux (13) sont assemblés par soudure dans une zone d'assemblage (20) située à leur périphérie.

6. Dispositif de détection de couple selon l'une des revendications 1 à 5, **caractérisé en ce que** le carter (12) et le support collecteur de flux (13) sont réalisés en une matière thermoplastique « haute température », choisie préférentiellement parmi le polysulfure de phénylène (PPS), le polyphtalamide (PPA) et le polyamide (PA).

## Claims

1. A torque detection device for an automobile steering system, the device comprising a torsion bar (4) or equivalent means connecting an input shaft (2) to an output shaft (3), a set of permanent magnets (5) secured to the input shaft (2), a pair of magnetic cylinder heads (6, 7) secured to the output shaft (3), a flux collector support (13) inwardly having two slip rings (8, 9) that is mounted in a casing (12) of the steering system, and a magnetic flux sensor (10, 11) mounted on the collector support (13), **characterized in that** the flux collector support (13) and the casing (12) are made primarily from identical or compatible plastic materials, and **in that** the flux collector support (13) and the casing (12) are assembled by welding so as to form a single-piece structure.

2. The torque detection device according to claim 1, **characterized in that** the plastic casing (12) and the flux collector support (13) are assembled by ultrasound welding.

3. The torque detection device according to claim 1, **characterized in that** the plastic casing (12) and the flux collector support (13) are assembled by vibration welding.

4. The torque detection device according to claim 1, **characterized in that** the plastic casing (12) and the flux collector support (13) are assembled by laser welding.

5. The torque detection device according to one of claims 1 to 4, **characterized in that** the plastic casing (12) and the flux collector support (13) are assembled by welding in an assembly area (20) situated at their periphery.

6. The torque detection device according to one of claims 1 to 5, **characterized in that** the casing (12) and the flux collector support (13) are made from a "high-temperature" thermoplastic material, preferably chosen from among polyphenylene sulfide (PPS), polyphthalamide (PPA) and polyamide (PA).

## Patentansprüche

1. Vorrichtung zur Erkennung des Drehmoments für ein Lenksystem eines Kraftfahrzeugs, wobei die Vorrichtung einen Torsionsstab (4) oder Ähnliches umfasst, der eine Antriebs- (2) mit einer Abtriebswelle (3) verbindet, eine Gruppe von Permanentmagneten (5), die mit der Antriebswelle (2) fest verbunden sind, ein Paar Rückschlüsse (6, 7), die mit der Abtriebswelle (3) fest verbunden sind, einen Fluidsammlerhalter (13), in dessen Inneren sich zwei Schleifringe (8, 9) befinden, der in einem Gehäuse (12) des Lenksystems montiert ist, und einen Magnetflusssensor (10, 11), der auf dem Sammlerhalter (13) montiert ist, **dadurch gekennzeichnet, dass** der Fluidsammlerhalter (13) und das Gehäuse (12) zum Großteil aus identischen oder kompatiblen Plastikmaterialien hergestellt sind, und dadurch, dass der Fluidsammlerhalter (13) und das Gehäuse (12) durch Schweißen verbunden sind, um eine einstückige Struktur zu bilden.

2. Vorrichtung zur Erkennung des Drehmoments nach Anspruch 1, **dadurch gekennzeichnet, dass** das Gehäuse (12) aus Plastikmaterial und der Fluidsammlerhalter (13) durch eine Ultraschallschweißung verbunden sind.

3. Vorrichtung zur Erkennung des Drehmoments nach Anspruch 1, **dadurch gekennzeichnet, dass** das Gehäuse (12) aus Plastikmaterial und der Fluidsammlerhalter (13) durch eine Vibrationsschweißung verbunden sind.

4. Vorrichtung zur Erkennung des Drehmoments nach Anspruch 1, **dadurch gekennzeichnet, dass** das Gehäuse (12) aus Plastikmaterial und der Fluidsammlerhalter (13) durch eine Laserschweißung verbunden sind.

5. Vorrichtung zur Erkennung des Drehmoments nach einem der Ansprüche 1 bis 4, **dadurch gekennzeichnet, dass** das Gehäuse (12) aus Plastikmaterial und der Fluidsammlerhalter (13) durch eine Schweißung in einem Verbindungsbereich (20) verbunden sind, der sich an ihrem Umfang befindet.

6. Vorrichtung zur Erkennung des Drehmoments nach einem der Ansprüche 1 bis 5, **dadurch gekennzeichnet, dass** das Gehäuse (12) und der Fluidsammlerhalter (13) aus einem thermoplastischen "Hochtemperatur"-Material hergestellt sind, vorzugsweise ausgewählt aus Polyphenylensulfid (PPS), Polyphthalamid (PPA) und Polyamid (PA).
